# EUROPÄISCHE PATENTSCHRIFT

(11) **EP 1 419 931 B1**
(45) Veröffentlichungstag und Bekanntmachung des Hinweises auf die Patenterteilung: **11.06.2008**
(21) Anmeldenummer: 03103950.6
(22) Anmeldetag: 24.10.2003
(51) Int. Cl.: B60Q 1/068

(54) **Scheinwerfer für Fahrzeuge**
Headlight for vehicles
Projecteur pour véhicules

(30) Priorität: 14.11.2002 DE 10252983
(43) Veröffentlichungstag der Anmeldung: 19.05.2004
(73) Patentinhaber: Hella KGaA Hueck & Co., 59552 Lippstadt (DE)
(72) Erfinder: Hering, Hubertus, 59457, Werl (DE); Cramer, Herbert, 59602, Rüthen (DE); Brostik, Havel, 78349, Lutin, okr. Olomoc (CZ)

(56) Entgegenhaltungen:
- EP-A- 0 806 577
- EP-A1- 0 225 480
- EP-A1- 0 379 392
- EP-A1- 0 972 675

## Beschreibung

Die Erfindung betriff einen Scheinwerfer für Fahrzeuge mit einem Lichtelement, mit einem Trägerelement, mit mindestens einer das Lichtelement mit dem Trägerelement verbindenden Gelenkvorrichtung, die eine kugelförmige Gelenkschale und einen kugelförmigen Gelenkkopf aufweist, wobei die Gelenkschale mit Schalenabschnitten den Gelenkkopf umfasst und zusammen mit dem Gelenkkopf in eine Aufnahmehülse eingeschoben ist und mit den Schalenabschnitten an der Innenseite der Aufnahmehülse anliegt.

Ein solcher Scheinwerfer für Fahrzeuge ist aus der DE - A - 38 41 632 bekannt. Ein Lichtelement des Scheinwerfers besteht aus einem schalenförmigen Reflektor und einer den Reflektor abdeckenden Lichtscheibe. Das Lichtelement ist über mehrere Gelenkvorrichtungen mit einem Trägerelement verbunden.
Die Gelenkvorrichtung ist ein Teil einer Einstelleinrichtung. Die Einstelleinrichtung weist eine Verstellbolzen auf, der axial verstellbar in einer Öffnung des Trägerelements gehalten ist. An dem freien in Lichtaustrittsrichtung weisenden Ende weist der Verstellbolzen einen kugelförmigen Gelenkkopf auf. Eine Gelenkschale umfasst den Gelenkkopf mit Schalenabschnitten, die mit ihren freien Endabschnitten in Aufsetzrichtung weisen. Die Schalenabschnitte weisen scharnierartige Gelenke auf, damit diese mit dem Gelenkkopf fügbar sind. Bei der Montage der Gelenkvorrichtung ist die Gelenkschale mit einem Abschnitt in die Aufnahmehülse eingeschoben und ein freier Abschnitt der Schalenabschnitte ist um die scharnierartigen Gelenke nach außen aufgeklappt. Beim Eintauchen des Gelenkkopfes in die Gelenkschale und Einschieben der Gelenkschale in die Aufnahmehülse kappen die freien Abschnitte der Schalenabschnitte um die scharnierartigen Gelenke zusammen und liegen an der Innenseite der Aufnahmehülse an. Dadurch ist der Gelenkkopf sicher in der Gelenkschale gehalten. und Die Gelenkschale ist zusammen mit dem Gelenkkopf soweit in eine Aufnahmehülse des Reflektors eingeschoben bis der Gelenkschale selbsttätig mit der Aufnahmehülse verrastet und durch die Verrastung axial gehalten ist. Dabei hintergreifen Rastnasen einen in Einsetzrichtung weisen Rand der Aufnahmehülse und radial nach außen abstehenden Halteansätze der federnden Schalenabschnitte liegen an dem entgegen der Einsetzrichtung weisenden Rand der Aufnahmehülse an. Damit die Gelenkschale stabil mit der Aufnahmehülse verbindbar ist, müssen die Schalenabschnitte der Gelenkschale entsprechend stabil ausgeführt sein. Ein solche Gelenkvorrichtung baut entsprechend voluminös. Weiterhin ist die Gelenkschale in ihrer vormontierten Stellung, in der die Gelenkschale mit einem Abschnitt in die Aufnahmehülse eingeschoben ist, nicht verliersicher gehalten.

Ein gattungsgemäßer Scheinwerfer ist aus EP-A-0 806 577 bekannt.

Aufgabe der Erfindung ist es, den im Oberbegriff des Anspruchs 1 beschriebenen Scheinwerfer für Fahrzeuge derart zu verbessern, dass sowohl die den Gelenkkopf umfassenden federnden Schalenabschnitte der Gelenkschale dünnwandig herstellbar sind, damit die Gelenkschale leichtgängig mit dem Gelenkkopf verrastbar ist, als auch die Gelenkschale bei kompakter Bauweise sicher an der Aufnahmehülse festsetzbar ist. Diese Aufgabe wird nach der Erfindung dadurch gelöst, dass die Gelenkschale mit einem Sockel an dem Boden der Aufnahmehülse anliegt und auf der anderen Seite freistehende und den Gelenkkopf umfassende federnde Schalenabschnitte aufweist, wobei federnde Rastelemente der Aufnahmehülse den Sockel der Gelenkschale hintergreifen und die Gelenkschale axial an der Aufnahmehülse halten. Vor einem Fügen des Gelenkkopfes und der Aufnahmehülse ist die Gelenkschale verliersicher an dem Gelenkkopf gehalten. Da die Schalenabschnitte die Gelenkschale nicht axial an der Aufnahmehülse haltern, sind diese so dünnwandig ausführbar, dass sie federnd an dem Gelenkkopf und der Innenseite der Aufnahmehülse anliegen und somit den Gelenkkopf radial spielfrei haltern. Ferner baut die Gelenkvorrichtung kompakt.

In diesem Zusammenhang ist es besonders vorteilhaft, wenn die federnden Rastelemente von Rastarmen gebildet sind, die jeweils an einen Rand einer Öffnung in der umlaufenden Seitenwand der Aufnahmehülse angeformt sind und mit ihrem freien Endabschnitt zum Boden der Aufnahmenhülse und radial nach innen weisen. Hierbei ist es weiterhin zweckmäßig, wenn die federnden Rastelemente an einem radial nach außen freistehenden umlaufenden Randabschnitt des Sockels anliegen und den Sockel gegen den Boden der Aufnahmehülse halten. Die Rastverbindung zwischen den Rastelementen und der Gelenkschale kann sich nicht ungewollt lösen, da sie geschützt in dem Inneren der Aufnahmehülse angeordnet ist.

Die Gelenkschale ist axial auch bei groben Toleranzen spielfrei in der Aufnahmehülse gehalten, wenn der Boden der Aufnahmehülse in Einsetzrichtung der Gelenkschale elastisch nachgiebig ausgeführt ist. Die Elastizität des Bodens ist durch eine einfachen Aufbau der Aufnahmehülse erreicht, wenn die Öffnungen für die Rastelemente sich von der umlaufenden Seitenwand der Aufnahmehülse bis zu dem zentralen Bereich des Bodens hin erstrecken. Eine Anlage des Sockel der Gelenkschale an dem zentralen Bereich des Bodens der Aufnahmehülse ist sicher, wenn der zentrale Bereich des Bodens der Aufnahmehülse auf der dem Sockel zugewandten Seite eine als Anschlag für den Sockel dienende Erhöhung aufweist.

Die Aufnahmehülse kann radial eine hohe Druckkraft durch die federnden Schalenabschnitte der Gelenkschale aufnehmen, wenn die Gelenkschale mit den entgegen der Einsetzrichtung weisenden Randabschnitten ihrer Schalenabschnitte an der Innenseite der Aufnahmehülse zwischen den Öffnungen für die federnden Rastelemente und dem freien Rand der Aufnahmehülse an der Innenseite der Aufnahmehülse federnd anliegt und den Gelenkkopf mit den freistehenden radial federnden Schalenabschnitten radial in seiner Solllage hält. In diesem Zusammenhang ist es zweckmäßig, wenn die federnden Schalenabschnitte an den sich benachbarten Seiten ihrer freien Randabschnitte jeweils einen Ansatz aufweisen. Dadurch ist der Gelenkkopf mit der Aufnahmehülse und somit auch das Lichtelement auch bei sehr dünnwandigen Schalenabschnitten so stabil mit dem Trägerelement verbindbar, dass das Lichtelement im Fahrbetrieb vibrationsfrei mit dem Trägerelement verbindbar ist.

Bei einer besonders vorteilhaften Weiterbildung der Erfindung ist der Sockel der Gelenkschale eine kreisrunde Scheibe, deren äußere Randabschnitt an dem dem Boden der Aufnahmehülse zugewandten Rand umlaufend einen Radius aufweist. Bei der Montage zentriert sich Sockel an den radial nach innen gerichteten Rastelementen. Weiterhin ist es zweckmäßig, wenn der äußere Randabschnitt der kreisrunden Scheibe an dem dem Boden der Aufnahmehülse abgewandten Rand für die federnde Rastelemente eine umlaufende Anlagefase aufweist. Dadurch ist auch bei groben Toleranzen eine Anlage der radial federnden Rastelement der Aufnahmehülse an der Anlagefase der Gelenkschale sicher.

In der Zeichnung ist ein Ausführungsbeispiel nach der Erfindung dargestellt und zwar zeigen,

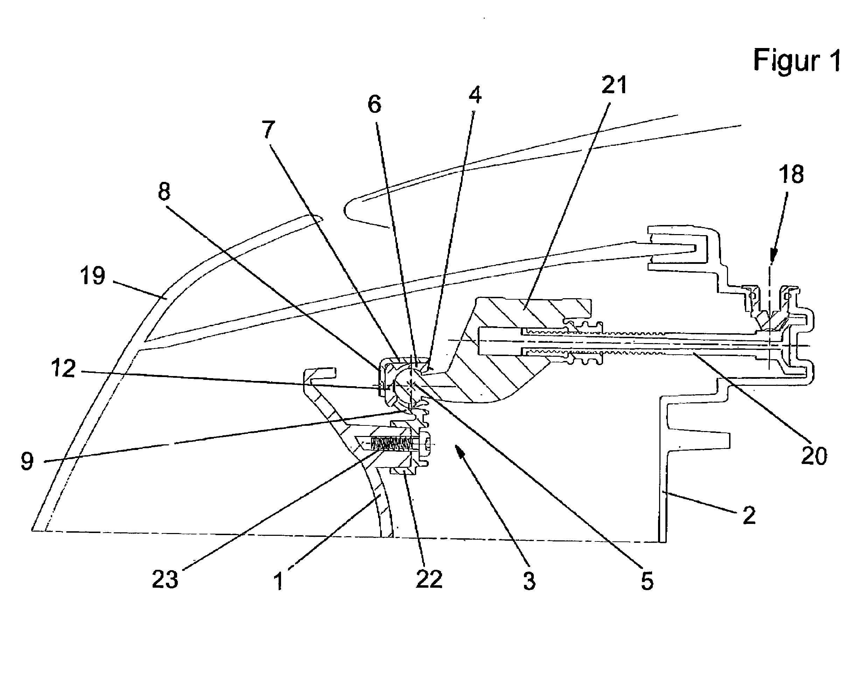

Figur 1 in einem vertikalen Schnitt einen Abschnitt eines Scheinwerfers für Fahrzeuge mit einem Lichtelement und einer Gelenkvorrichtung mit einer einen Gelenkkopf und eine Gelenkschale aufnehmenden Aufnahmehülse,

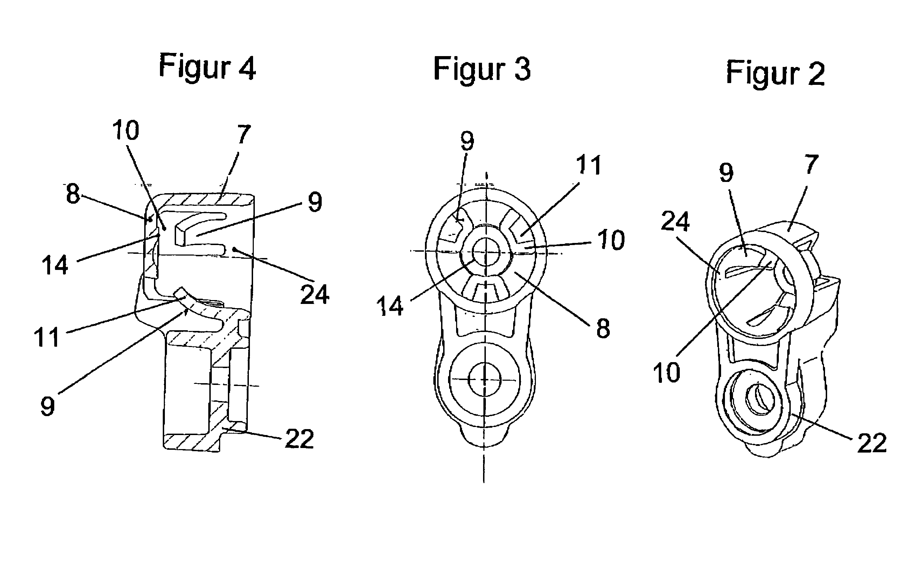

Figur 2 in einer perspektivischen Ansicht die an dem Lichtelement befestigte Aufnahmehülse als Einzelteil,
Figur 3 in einer Vorderansicht die Aufnahmehülse nach Figur 2,
Figur 4 in einem mittleren Längsschnitt die Aufnahmehülse nach Figur 2,

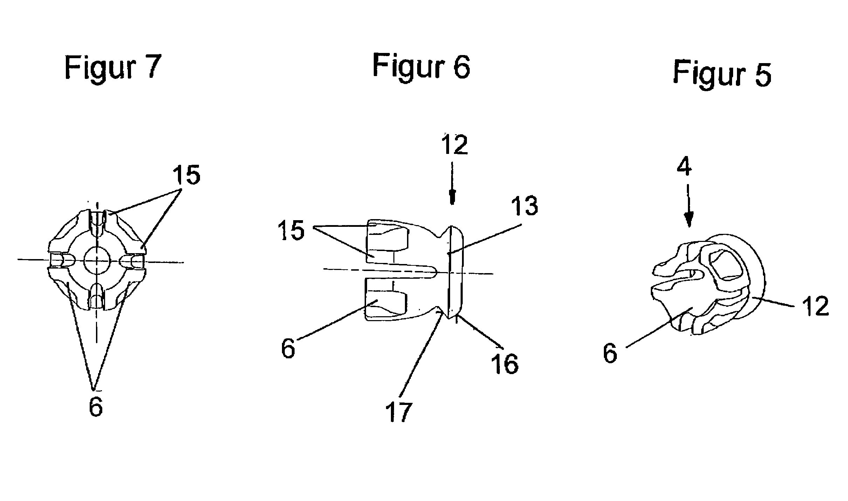

Figur 5 in einer perspektivischen Ansicht die Gelenkschale als Einzelteil,
Figur 6 in einer Seitenansicht die Gelenkschale nach Figur 5 und
Figur 7 in einer Vorderansicht die Gelenkschale nach Figur 6.

Der Scheinwerfer für Fahrzeuge weist ein von einem schalenförmigen Reflektor gebildetes Lichtelement 1 auf. Das Lichtelement 1 ist über eine Gelenkvorrichtung 3 und eine Einstelleinrichtung 18 und zwei weiteren nicht dargestellten Gelenkvorrichtungen mit einem Trägerelement 2 verbunden. Das Lichtelement 1 ist durch die Einstelleinrichtung 18 um eine durch Gelenkvorrichtungen definierte Schwenkachse verstellbar. Das Trägerelement 2 ist ein aus Kunststoff bestehendes Gehäuse, dessen vordere Seite durch eine lichtdurchlässige Abschlussscheibe 19 abdeckt ist. Die Einstelleinrichtung 18 weist einen Verstellbolzen 20 auf, der in Lichtaustrittsrichtung verläuft und mit einem am Trägerelement 2 angeordneten Getriebe 21 zusammenwirkt. Der in Lichtaustrittsrichtung weisende Endabschnitt des Verstellbolzens 20 greift mit einem Gewindeabschnitt in eine Gewindebohrung eines aus Kunststoff bestehenden Führungsteils 21 ein, das in einer Führung (nicht dargestellt) des Trägerelements 2 radial gehalten und axial verschiebbar ist. Das Führungsteil 21 weist an einem in Lichtaustrittsrichtung gerichteten freien Ende eines Vorsprungs einen Gelenkkopf 5 einer Gelenkvorrichtung 3 auf. Der Gelenkkopf 5 ist mit einer auf ihn aufgerasteten Gelenkschale 4 in eine Aufnahmehülse 7 eingesetzt. Die Aufnahmehülse 7 weist einen an ihre umlaufende Seitenwand angeformten Befestigungsansatz 22 auf, der mittels einer Schraubverbindung 23 an dem Lichtelement 1 befestigt ist. Die Gelenkschale 4 weist einen von einer kreisrunden Scheibe gebildeten Sockel 12 auf, an dessen einen Seite vier Schalenabschnitte 6 angeformt sind, die radial federnd, zungenförmig und dünnwandig ausgeführt sind. Die Schalenabschnitte 6 liegen nach einem Aufrasten auf den Gelenkkopf 5 unter Vorspannung an der Außenseite des Gelenkkopfes 5 an und weisen außen an ihren in Aufrastrichtung gerichteten Endabschnitten jeweils zwei angeformte Ansätze 15 auf. Jeweils ein Ansatz 15 ist an den sich benachbarten Seiten der Schalenabschnitte 6 angeordnet. Die Schalenabschnitte 6 liegen mit den Ansätzen 15 an der zylindrischen Innenseite der Aufnahmehülse 7 am freien Randbereich 24 an. Dadurch ist der Gelenkkopf 5 nach einem Einschieben der Gelenkschale 4 in die Aufnahmenhülse 7 in der Gelenkschale 4 gehalten. Die Gelenkschale 4 liegt mit der Außenseite ihres Sockels 12 an einem Boden 8 der Aufnahmehülse 7 an. Drei an die Aufnahmehülse 7 angeformte Rastelemente 9, die von Rastarmen gebildet sind, halten den Sockel 12 spielfrei an dem Boden 8 der Aufnahmehülse 7. Die Rastelemente 9 sind an jeweils einen in Lichtaustrittsrichtung gerichteten Rand einer Öffnung 10 in der umlaufenden Seitenwand der Aufnahmenhülse 7 angeformt. Die Rastelemente 9 weisen mit ihren Endschnitt 11 zum Boden 8 und zum umlaufenden radial nach außen abstehenden Randabschnitt 13 des Sockels 12. Die Rastelemente 9 liegen mit der Stirnfläche ihrer Endabschnitte 11 flächig an einer umlaufenden Anlagefase 17 des Sockels 12 an. Die die Rastelemente 9 aufnehmenden Öffaufnehmenden Öffnungen 10 der Aufnahmenhülse 7 erstrecken sich von der umlaufenden Seitenwand der Aufnahmenhülse 7 bis zu eine zentralen Bereich des Bodens 8. Dadurch ist der zentrale Bereich des Bodens 8 axial elastisch nachgiebig und eine spielfrei Halterung der Gelenkschale 4 in der Aufnahmehülse 7 ist auch bei groben Toleranzen sicher. Der Sockel 12 weist auf der dem Boden 8 zugewandten Seite an seinem umlaufenden Rand einen Radius 16 auf. Dadurch richtet sich die Gelenkschale 4 mit ihrer Mittelachse, auch bei einem schrägen Einsetzen der Gelenkschale 4 in die Aufnahmehülse 7, an den nach innen gerichteten Endabschnitten der Rastelemente zur Längsachse der Aufnahmehülse 7 aus.

### Bezugszeichenliste:

- 1.: Lichtelement
- 2.: Trägerelement
- 3.: Gelenkvorrichtung
- 4.: Gelenkschale
- 5.: Gelenkkopf
- 6.: Schalenabschnitt
- 7.: Aufnahmehülse
- 8.: Boden
- 9.: Rastelement
- 10.: Öffnung
- 11.: Endabschnitt
- 12.: Sockel
- 13.: Randabschnitt
- 14.: Erhöhung
- 15.: Ansatz
- 16.: Radius
- 17.: Anlagefase
- 18.: Einstelleinrichtung
- 19.: Abschlussscheibe
- 20.: Verstellbolzen
- 21.: Führungsteil
- 22.: Befestigungsansatz
- 23.: Schraubverbindung
- 24.: Randbereich

## Patentansprüche

1. Scheinwerfer für Fahrzeuge mit einem Lichtelement (1), mit einem Trägerelement (2), mit mindestens einer das Lichtelement (1) mit dem Trägerelement (2) verbindenden Gelenkvorrichtung (3), die eine kugelförmige Gelenkschale (4) und einen kugelförmigen Gelenkkopf (5) aufweist, wobei die Gelenkschale (4) mit Schalenabschnitten (6) den Gelenkkopf (5) umfasst und zusammen mit dem Gelenkkopf (5) in eine Aufnahmehülse (7) eingeschoben ist und mit den Schalenabschnitten (6) an der Innenseite der Aufnahmehülse (7) anliegt, wobei die Gelenkschale (4) mit einem Sockel (12) an dem Boden (8) der Aufnahmehülse (7) anliegt und auf der anderen Seite freistehende und den Gelenkkopf (5) umfassende federnde Schalenabschnitte (6) aufweist, **dadurch gekennzeichnet, dass** federnde Rastelemente (9) der Aufnahmehülse (7) den Sockel (12) der Gelenkschale (4) hintergreifen und die Gelenkschale (4) axial an der Aufnahmehülse (7) halten.

2. Scheinwerfer nach Anspruch 1, **dadurch gekennzeichnet, dass** die federnden Rastelemente (9) von Rastarmen gebildet sind, die jeweils an einen Rand einer Öffnung (10) in der umlaufenden Seitenwand der Aufnahmehülse (7) angeformt sind und mit ihrem freien Endabschnitt (11) zum Boden (8) der Aufnahmenhülse (7) und radial nach innen weisen.

3. Scheinwerfer nach Anspruch 1 oder 2, **dadurch gekennzeichnet, dass** die federnden Rastelemente (9) an einem radial nach außen freistehenden umlaufenden Randabschnitt (13) des Sockels (12) anliegen und den Sockel (12) gegen den Boden (8) der Aufnahmehülse (7) halten.

4. Scheinwerfer nach einem der Ansprüche 2 bis 3, **dadurch gekennzeichnet, dass** die Öffnungen (10) für die Rastelemente (9) sich von der umlaufenden Seitenwand der Aufnahmehülse (7) bis zu dem zentralen Bereich des Bodens (8) hin erstrecken.

5. Scheinwerfer nach einem der Ansprüche 1 bis 4, **dadurch gekennzeichnet, dass** der zentrale Bereich des Bodens (8) der Aufnahmehülse (7) auf der dem Sockel (12) zugewandten Seite eine als Anschlag für den Sockel (12) dienende Erhöhung (14) aufweist.

6. Scheinwerfer nach einem der Ansprüche 1 bis 5, **dadurch gekennzeichnet, dass** die Gelenkschale (4) an der Innenseite der Aufnahmehülse (7) zwischen den Öffnungen (10) für die federnden Rastelemente (9) und dem freien Rand der Aufnahmehülse (7) an der Innenseite der Aufnahmehülse (7) federnd anliegt und den Gelenkkopf (5) mit den freistehenden radial federnden Schalenabschnitten (6) in seiner Solllage hält.

7. Scheinwerfer nach Anspruch 6, **dadurch gekennzeichnet, dass** die federnden Schalenabschnitte (6) an ihrem entgegen der Einsetzrichtung weisenden Randabschnitt mindestens einen Ansatz (15) aufweisen, mit dem sie an der Innenseite der Aufnahmehülse (7) anliegen.

8. Scheinwerfer nach Anspruch 7, **dadurch gekennzeichnet, dass** die federnden Schalenabschnitte (6) an den sich benachbarten Seiten ihrer freien Randabschnitte jeweils einen Ansatz (15) aufweisen.

9. Scheinwerfer nach einem der Ansprüche 1 bis 8, **dadurch gekennzeichnet, dass** der Sockel (12) der Gelenkschale (4) eine kreisrunde Scheibe ist, deren äußerer Randabschnitt (13) an dem dem Boden (8) der Aufnahmehülse (7) zugewandten Rand umlaufend einen Radius (16) aufweist.

10. Scheinwerfer nach einem der Ansprüche 1 bis 9, **dadurch gekennzeichnet, dass** der Sockel (12) der Gelenkschale (4) eine kreisrunde Scheibe ist, deren äußerer Randabschnitt (13) an dem dem Boden (8) der Aufnahmehülse (7) abgewandten Rand für die federnde Rastelemente (9) eine umlaufende Anlagefase (17) aufweist.

## Claims

1. Headlamp for vehicles comprising a lighting element (1), a carrying element (2) and at least one linkage mechanism (3) linking the lighting element (1) to the carrying element (2), where the linkage mechanism (3) consists of a spherical joint socket (4) and a spherical joint ball (5), where the joint socket (4) consists of multiple sections (6) which are arranged around the joint ball (5) and reside in a retaining sleeve (7) together with the joint ball (5) such that the joint socket sections (6) go along and touch the inner face of the retaining sleeve (7), where the joint socket (4) has a base (12) which fits into the bottom (8) of the retaining sleeve (7), and elastic joint socket sections (6) which protrude from the other side of the retaining sleeve (7) to form a dish for the joint ball (5), and where spring-action catches (9) of the retaining sleeve (7) hold the base (12) of the joint socket (4) from behind to press the joint socket (4) against the retaining sleeve (7) in axial direction.

2. Headlamp of claim 1, **characterized in that** the spring-action catches (9) are made up of locking bolts each of which is molded to an edge of an opening (10) in the circumferential side wall of the retaining sleeve (7) and whose protruding free end sections (11) point towards the bottom (8) of the retaining sleeve (7) and in radial direction towards the inside.

3. Headlamp of claim 1 or 2, **characterized in that** the spring-action catches (9) fit around a circumferential edge section (13) of the base (12) which protrudes out from the base (12) in radial direction to hold the base (12) against the bottom (8) of the retaining sleeve (7).

4. Headlamp of claims 2 to 3, **characterized in that** the openings (10) left for the catches (9) go all the way from the circumferential side wall of the retaining sleeve (7) to the central section of the bottom (8).

5. Headlamp of claims 1 to 4, **characterized in that** the central section of the bottom (8) of the retaining sleeve (7) has a raised area (14) on the side facing towards the base (12) such that the raised area (14) acts as a stop for the base (12).

6. Headlamp of claims 1 to 5, **characterized in that** the joint socket (4) has a springy connection to the inside of the retaining sleeve (7) between the openings (10) for the spring-action catches (9) and the free edge of the retaining sleeve (7) to hold the joint ball (5) and the protruding and radially spring-acting joint socket sections (6) at their specified position.

7. Headlamp of claim 6, **characterized in that** the spring-action catches (6) have at least one cam (15) on their edge that faces away from the direction of insertion such that the cam (15) fits against the inner face of the retaining sleeve (7).

8. Headlamp of claim 7, **characterized in that** each of the spring-action joint socket sections (6) have a cam (15) on the adjoining sides of their free edge sections.

9. Headlamp of claims 1 to 8, **characterized in that** the base (12) of the joint socket (4) is a perfectly circular disk whose outer edge section (13) has a circumferential radius (16) along the edge facing towards the bottom (8) of the retaining sleeve (7).

10. Headlamp of claims 1 to 9, **characterized in that** the base (12) of the joint socket (4) is a perfectly circular disk whose outer edge section (13) has a circumferential chamfer (17) for the spring-action catches (9) along the edge facing away from the bottom (8) of the retaining sleeve (7).

## Revendications

1. Projecteur pour véhicules avec un élément d'éclairage (1), avec un élément de support (2), avec au moins un dispositif articulé (3) reliant l'élément d'éclairage (1) à l'élément de support (2), lequel dispositif présente une coque articulée sphérique (4) et une tête articulée sphérique (5), la coque articulée (4) englobant la tête articulée (5) avec des sections de coque (6) et étant insérée dans une douille réceptrice (7) conjointement avec la tête articulée (5) et étant en contact avec le côté intérieur de la douille réceptrice (7) avec les sections de coque (6), la coque articulée (4) s'appuyant sur le fond (8) de la douille réceptrice (7) avec un socle (12) et présentant sur l'autre côté des sections de coque élastiques (6) indépendantes et englobant la tête articulée (5), **caractérisé en ce que** des éléments d'encliquetage élastiques (9) de la douille réceptrice (7) viennent en prise derrière le socle (12) de la coque articulée (4) et maintiennent la coque articulée (4) axialement sur la douille réceptrice (7).

2. Projecteur selon la revendication 1, **caractérisé en ce que** les éléments d'encliquetage élastiques (9) sont formés par des bras d'encliquetage, qui sont chacun formés sur un bord d'une ouverture (10) dans la paroi latérale périphérique de la douille réceptrice (7) et, avec leur extrémité terminale libre (11), sont tournés vers le fond (8) de la douille réceptrice (7) et, radialement, vers l'intérieur.

3. Projecteur selon la revendication 1 ou 2, **caractérisé en ce que** les éléments d'encliquetage élastiques (9) sont en contact avec une section de bord périphérique (13), qui est orientée radialement vers l'extérieur, du socle (12) et maintiennent le socle (12) contre le fond (8) de la douille réceptrice (7).

4. Projecteur selon l'une des revendications 2 à 3, **caractérisé en ce que** les ouvertures (10) des éléments d'encliquetage (9) s'étendent de la paroi latérale périphérique de la douille réceptrice (7) à la zone centrale du fond (8).

5. Projecteur selon l'une des revendications 1 à 4, **caractérisé en ce que** la zone centrale du fond (8) de la douille réceptrice (7) présente, sur le côté tourné vers le socle (12), un rehaussement (14) servant de butée pour le socle (12).

6. Projecteur selon l'une des revendications 1 à 5, **caractérisé en ce que** la coque articulée (4) est en contact de façon élastique avec le côté intérieur de la douille réceptrice (7) entre les ouvertures (10) des éléments d'encliquetage élastiques (9) et le bord libre de la douille réceptrice (7) et maintient la tête articulée (5) dans sa position théorique avec les sections de coque élastiques (6) radialement libres.

7. Projecteur selon la revendication 6, **caractérisé en ce que** les sections de coque élastiques (6) présentent, sur leur section de bord orientée à l'inverse du sens d'insertion, au moins un épaulement (15) avec lequel elles sont en contact avec le côté intérieur de la douille réceptrice (7).

8. Projecteur selon la revendication 7, **caractérisé en ce que** les sections de coque élastiques (6) présentent chacune un épaulement (15) sur les côtés contigus de leurs sections de bord libres.

9. Projecteur selon l'une des revendications 1 à 8, **caractérisé en ce que** le socle (12) de la coque articulée (4) est une rondelle circulaire, dont la section de bord extérieure (13) présente en périphérie un rayon (16) sur le bord tourné vers le fond (8) de la douille réceptrice (7).

10. Projecteur selon l'une des revendications 1 à 9, **caractérisé en ce que** le socle (12) de la coque articulée (4) est une rondelle circulaire, dont la section de bord extérieure (13) présente un chanfrein d'appui périphérique (17) sur le bord des éléments d'encliquetage élastiques (9) qui est opposé au fond (8) de la douille réceptrice (7).
